# EUROPEAN PATENT SPECIFICATION

(11) **EP 3 274 498 B1**
(45) Date of publication and mention of the grant of the patent: **16.09.2020**
(21) Application number: 16719471.1
(22) Date of filing: 22.03.2016
(51) Int. Cl.: D06F 58/30, D06F 103/08, D06F 105/24, D06F 58/14, D06F 103/36, D06F 105/28

(54) **HANGING DRIER**
HÄNGETROCKNER
SÉCHOIR À SUSPENSION

(30) Priority: 23.03.2015 IT FI20150018 U
(43) Date of publication of application: 31.01.2018
(73) Proprietor: Furieri, Mario, 52011 Bibbiena - Fraz Partina (AR) (IT); Mezzopera, Ennio, 60044 Fabriano (AN) (IT)
(72) Inventor: FURIERI, Mario, I-52011 Bibbiena - Fraz Partina (AR) (IT)
(74) Representative: Premru, Rok
(86) International application number: PCT/IB2016/000360
(87) International publication number: WO 2016/151392

(56) References cited:
- EP-A1- 0 258 762
- EP-A1- 2 545 980
- FR-A1- 2 872 828
- GB-A- 1 382 885
- JP-A- 2009 106 566
- US-B1- 6 570 139

## Description

The object of the present finding is an apparatus for household drying of laundry and garments in general and the drying method implemented therefrom.

The invention therefore falls within the field of household appliances, more precisely in that of appliances for the "dynamic" drying of laundry and garments. Even more specifically, the object of the present patent application pertains to the field of laundry dryers which can be hung to a wall or other support, consequently without occupying the floor.

The problem with drying laundry within homes has long been known and felt.

The solutions traditionally used are based on the use of laundry drying racks and/or "towel warmer"" radiators (or other similar means) that, supporting the laundry and garments, allow the drying thereof by natural circulation of ambient air, possibly heated.

However, said systems definable as "static", require rather long drying times; in the case of use of laundry drying racks, normally resting on the floor, there may also be considerable space requirements that may limit the usability of the room (e.g., a bathroom or a laundry room) wherein said means is placed.

Automatic mechanical drying devices such as dryers or hot air generators have also been developed, optionally installed in drying cabins, capable of forcibly directing the drying air flow towards the wet laundry (e.g., please see document FR 2 872 828) or the well-known tumble driers or washer-dryers that provide, instead, the introduction of said laundry in the rotary drum to subject it to complex drying cycles and programs.

All such mechanical devices while allowing very rapid and efficient drying of the laundry, however, have high purchase costs, high power consumptions and sometimes considerable dimensions, the latter limiting their use in small sized houses.

It should also be noted that such devices may be very noisy (especially in the case of tumble driers/washer-driers) and may crease the garments they dry complicating and greatly extending the subsequent ironing steps.

Additionally, such systems may input excessively moist air in the room (e.g., bathroom or laundry rooms) in which they are placed, due to the water subtracted from the laundry and the garments during the drying thereof.

This may severely penalise the thermal-hygrometric comfort of that ambient with formation of condensation on its walls and/or floor of the room and on the various accessories and furniture present therein.

Document EP 2 545 980 refers to a dehumidifier suitable for eliminating moisture in a room and, in addition, to be used as a laundry drying device too.

In particular, said dehumidifier is conceived to reduce the ambient humidity before the drying process for laundry could start and then to start said subsequent drying process. Even if this dehumidifier creates and assures better ambient conditions for the subsequent laundry drying, it doesn't care about the possible alterations of the user's wellness and/or of the formation of condensation on walls and floor due to the water subtracted from the laundry and the garments during the drying thereof.

The main object of the present invention is to obviate the drawbacks outlined above by providing an improved method for the drying and desiccation of laundry and garments, previously subjected to manual or mechanical washing (using washing machines) and the relevant drying device adapted to implement it.

A further object at least for one or more variants of the invention is to provide a laundry drying device that is efficient, silent, of low energy consumption and low purchase cost, as well as not bulky.

A further object of at least some variants of the invention is to allow the partialisation of the power of the drying device according to the quantity of laundry subjected to drying.

A further object at least for one or more variants of the invention is to dry the laundry in such conditions as to simplify, facilitate and shorten the subsequent manual or automated ironing step.

Another object of the present invention is to combine the advantages of an innovative laundry drying device with the possibility of dehumidifying and/or regulating the humidity of the ambient in which said device is placed, in particular a bathroom or laundry room.

This and other objects, which shall appear clear hereinafter, are achieved with one or more construction variants of the drying device illustrated in the following description and in the annexed claims, which constitute an integral part of the same description.

Further features of the present invention shall be better highlighted by the following description of a preferred embodiment, in accordance with the patent claims and illustrated in the enclosed drawing tables. Such figures should be considered as having an illustrative and non-limiting purpose, in which:

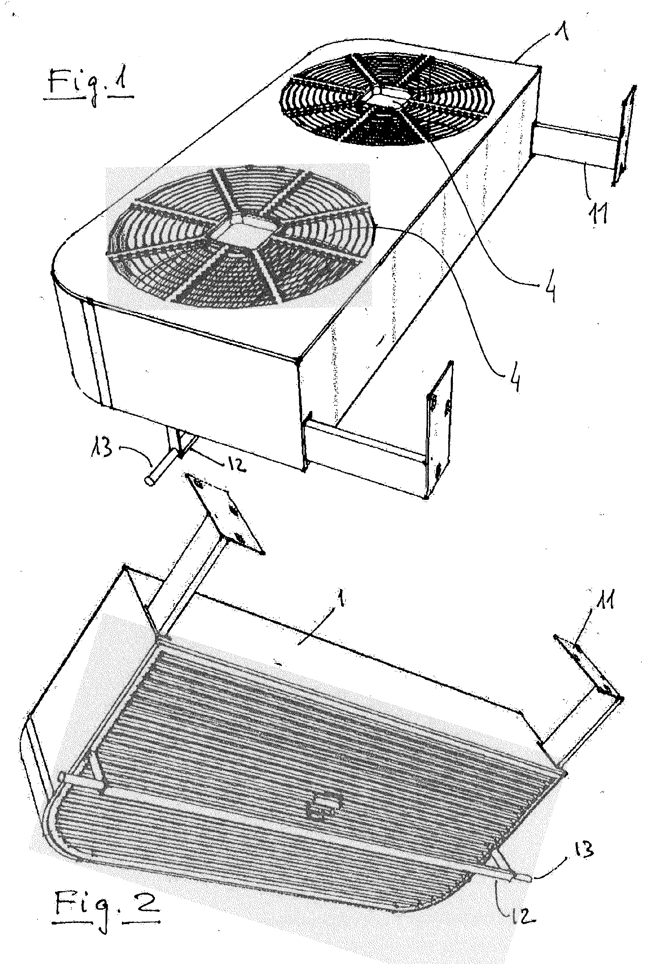

- Fig. 1 shows the finding of the invention according to a substantially top perspective view;
- Fig. 2 shows the finding of the invention according to a substantially bottom perspective view;

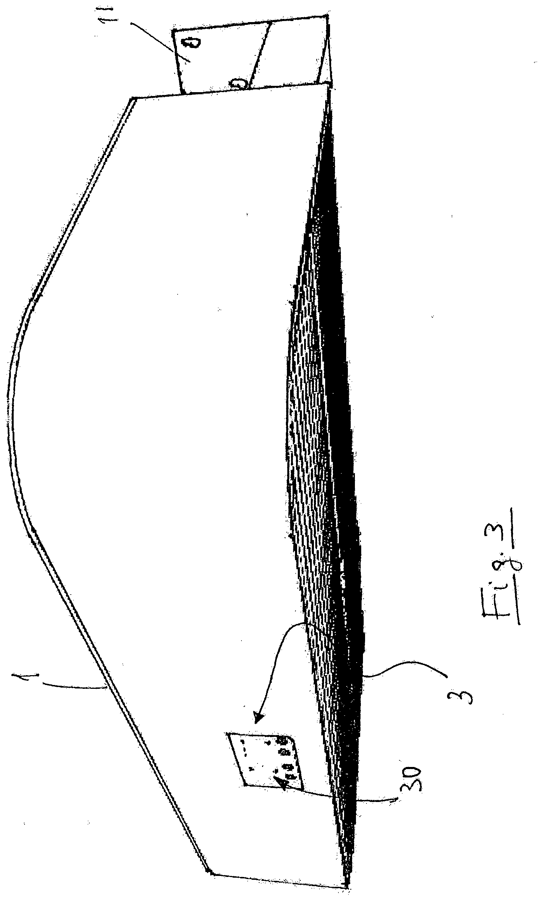

- Fig. 3 shows the finding of Fig. 2 in non-operating conditions;

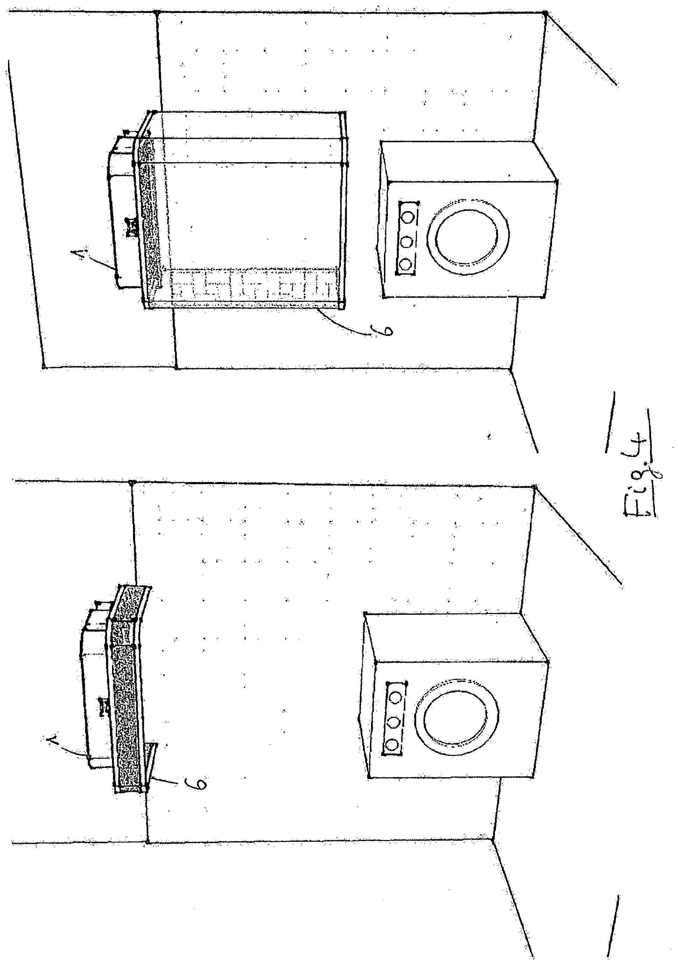

- Fig. 4 shows a possible construction variant of the finding of Figs. 1 to 3.

The features of the invention are now described using the references in the figures. It is noted that the above figures, although schematic, reproduce the components of the device in proportions between their spatial dimensions and orientations compatible with a possible embodiment, which is among the preferred ones. It is also noted that any dimensional and spatial term (such as "lower", "upper", "inner", "outer", "front", "rear" and the like) refers to the position according to which the hood and the components thereof are viewed when in operating configuration.

With the purpose of highlighting some features instead of others, not necessarily what described in the annexed drawings is to scale.

Before proceeding with a detailed description of one or more variants of the drying device of the invention and the relative drying method it is useful to specify that said device is intended to be positioned within an indoor environment of a home such as, for example, a bathroom or laundry room; in said rooms, a satisfactory "climate" in terms of temperature and humidity, both during the summer and, above all, the winter season, is normally desired to be maintained for the wellness and comfort of those using said ambients.

It is therefore clear that the presence of wet laundry and garments (hereinafter referred to as "laundry" for simplicity) in such rooms may alter this climate, in particular modify the humidity level

In order to avoid such problems, according to the invention the laundry drying speed is controlled in such a way that the humidity "collected" from the air that laps the laundry is such as to increase the ambient humidity by values compatible with the wellness and comfort of said users, in particular avoiding the generation of condensation on objects, walls and floor.

More specifically, this aim can be achieved providing a drying method able to generate at least one air flow having suitable drying operating parameters and capable of being guided and directed towards said laundry and comprising at least the steps of:
- acquiring and determining the ambient humidity
- setting and/or modulating said drying operating parameters of said drying air in such a way that the amount of humidity removed from the laundry does not increase the ambient humidity beyond preset threshold values, said preset threshold values being those values which:
- ensure at least the thermo-hygrometric wellness of an individual, said thermo-hygrometric wellness being defined according to the Fanger studies and provided in ASHRAE publications, and/or
- do not produce the formation of condensation at least on floors and walls of the ambient in which said drying is carried out,
it being understood that the existing air changes in the ambient must be sufficient for the maintenance of said preset threshold values.

As will be seen, such drying method is preferably implemented in a laundry drying device comprising a box-shaped body capable of being fixed to the wall through fixing means and provided with at least a suitable upper grating and at least a lower grating, which receives at least one blowing device of the drying air, a control and command unit provided with at least first sensor means of the humidity of the ambient in which said drying device is placed.

Said box-shaped body comprises suitable hanging means for hanging the laundry to be dried, said hanging means comprising one or more elements adapted to hang clothes hangers allowing a stowage of the laundry to be dried according to a substantially vertical set-up that favours the drying thereof and avoids the formation of crumples

By way of an example only, but indicative of a typical situation, it can be observed that in the bathrooms or laundry rooms wherein drying devices are generally placed there is provided, as for the standard, an air change equal to 6 volumes per hour. Considering that a medium size bathroom has a plan surface substantially of 4 m² and therefore a volume of about 10 m³, 6 air changes per hour substantially correspond to an air change of about 60 m³.

Even in the middle of winter with outside air characterised by a very high relative humidity (up to 100%) normally there are very low values of absolute humidity, for example equal to 8 g/m³ while in an indoor environment it is acceptable to have a relative humidity of 60% which, assuming an average indoor temperature of about 22 °C, corresponds to an absolute humidity of about 10.5 g/m³.

By simple calculations within reach of the man skilled in the art it is therefore clear that with the above 6 air changes up to 150 g water vapour are subtracted from the ambient in which the laundry drying devices are placed (said quantity being in fact obtained as: (10.5 - 8 g/m³) x 10 m³ x 6 air changes).

Experimental tests have shown that a "standard" load of laundry (about 5-6 kg) subjected to a washing machine or manual washing may contain approximately 2000 g of water. These could be dried in about 13 hours without compromising and exceeding comfort values of humidity of the ambient wherein the drying takes place.

In simpler terms, if the drying is carried out in 13 hours, up to 150 g/h of water vapour that are subtracted from the air changes may be input in the ambient air thereby maintaining ambient comfort conditions.

It is clear that such load of laundry would be dried in an even greater time using the static drying systems previously described such as, by contrast, much more quickly (even in 1-2 hours) with the current drying systems or hot air generators or drying cabins, however, in such case, increasing unacceptably the ambient relative humidity for the thermo-hygrometric wellness of the individual and/or for the formation of moulds.

In more detail, the laundry drying device according to the invention allows to implement a drying method which provides for:
- the ventilation and drying of the wet laundry through at least one air flow characterised by suitable drying operating parameters (e.g. such as drying temperature and speed, duration)
- the control of the ambient humidity in which the drying is carried out so as not to exceed, taking into account the number of foreseeable air changes, "acceptable" values of humidity, beyond which there is the impairment of the thermo-hygrometric wellness of an individual and/or the generation of condensation on walls, floor and/or objects of said ambient or even, as is known, a proliferation of moulds and/or odours.

Of course, the air changes of the ambient should be sufficient for the maintenance of said "acceptable" values.

Preferably, said drying method may take into account the number of air changes provided for the ambient as well as, optionally for the most sophisticated versions, consider the physical characteristics (humidity, temperature, etc.) of the outside air change.

"Acceptable humidity values" herein refers to those values of air humidity which, at each one specific temperature, do not produce the formation of condensation on floors, walls and/or objects of the ambient in which the drying device is placed, or the consequent formation of moulds and at the same time ensures the thermo-hygrometric wellness of an individual.

By way of a non-limiting example, for a household environment said "acceptable values" consider a relative humidity equal to or lower than 70% at 22 °C.

In these regard, please see the studies on the thermo-hygrometric wellness carried out by Fanger and provided in ASHRAE publications.

In particular, the drying method provides the possibility of regulating said drying air flow operating parameters:
- according to the ambient humidity value that is intended to be kept substantially constant and to values lower than said acceptable values, and/or alternatively
- according to the amount of humidity removed from the air flow that has lapped said laundry, so as to maintain an ambient humidity value within said "acceptable" values.

The drying operations are still not carried out if said ambient humidity value is greater than or equal to said "acceptable" values.

Generally, this control of the humidity of the air that has lapped the laundry, drying it, may be achieved by modulating the drying capacity of the drying device (e.g., by regulating the temperature of the air flow and/or its speed and/or its duration) or, at least according to some construction variants thereof, by generating "intermittent" air flows, that is activatable and/or deactivatable according to the humidity level detected from time to time in the ambient.

More precisely, at least a variant of said drying method is put in to place by a drying device comprising:
- at least one device 4 for the blowing of drying air towards the laundry to be dried, collected from the ambient in which the drying device is placed
- at least one electrical supply system of said blowing devices 4
- at least a first sensor means adapted to detect the ambient humidity
- an electronic command and control unit designed to command and control the drying operations, said drying operations being managed by specific and known software at least on the basis of the information provided by the aforesaid at least one sensor of the thermo-hygrometric parameters.

Another possible executive variant may further comprise at least one second sensor adapted to detect the humidity removed from the laundry by the drying air flow, said second sensor being advantageously positioned where the ambient air humidity is influenced by the drying process; preferably substantially downstream of the laundry subjected to drying.

Preferably said drying device comprises at least one heating unit of said drying air.

According to a possible embodiment, said drying device may comprise a dehumidification system that lowers the titre of the air in input that will be subsequently heated and used for drying. This way the advantage of dehumidifying the ambient air is obtained and at the same time, by operating with substantially "dry" drying air, the capacity of absorption of the humidity from the laundry is increased. Examples of such drying devices may be actual driers operating in accordance with the principles of the refrigeration cycle or a combination thereof with specific condensation units, in particular pipes concerned by a circulation of cold water.

However, such systems have the drawback of providing means for the discharge of condensation of the water vapour subtracted from the air to be used for laundry drying.

According to a preferred embodiment of the invention said drying device consists of a box-shaped body 1, hangable on a wall, within which at least two air blowing devices 4 are housed, e.g. consisting of motor-driven axial fans or similar appliances, and at least two corresponding air heating units.

Although multiple solutions are possible, said heating units may advantageously comprise electrical resistors, better if with finned surface to increase the heat exchange, and have different powers and/or be adjustable in various ways of the known type.

The upper and lower faces of the box-shaped body have suitable gratings (or the like) that allow the passage of the air both in intake from the ambient and in expulsion towards the laundry to be dried.

Said gratings may comprise means, such as baffles, for guiding and directing the air flow and/or air filtering means.

In the lower face (i.e. that facing the floor of the room) of the box-shaped body 1 there are provided means 12 used to hang the laundry that is thereby exposed directly to the drying air flow.

Preferably, said means 12 for hanging the laundry may include one or more elements, for example bars 12, adapted to hang "clothes hangers" (also called "hangers"),.

Said hanging means 12 may also be extractable at bottom from said box-shaped body 1 moving from a retracted rest position (when they can be seated and hidden inside a suitable seat) to an extracted working position.

Nothing prevents a simplified version in which said hanger means 12 are fixed relative to the box-shaped body 1 whereon they are mounted.

For greater convenience of use, said clothes hanger means 12 may be telescopic and/or provide for additional extractable elements 13 that increase its hanging and stowage ability of the laundry to be dried.

Such clothes hanger means 12 allow a stowage of the laundry to be dried according to a substantially vertical set-up that favours the drying thereof and avoids the formation of crumplings. This facilitates the subsequent ironing operation.

It is clear that the use of "clothes hangers" forces the installation of the drying device on the wall so that the distance between the garment and said wall allows an adequate circulation of the air flow.

In this regard, fixing means 11, embodied e.g. as telescopic hanging means, obtained in the rear part of the box-shaped body 1, so as to pull or space the drying device to the installation wall as needed may be particularly advantageous. Said telescopic means 11 may consist of retractable brackets inside the box-shaped body 1 of the drying device; such a device is also particularly advantageous in order to limit the overall dimensions of the dryer during transport.

With reference to the annexed figures, reference numeral 30 defines an interface panel of the feeding, command and control unit 3 of the drying device.

Preferably, said unit 3 is positioned on the front side of the box-shaped body 1, but nothing prevents that it may be installed on the wall separately from the drying device but communicating with it through known means and systems, or integrated with a remote control device such as a remote control.

On the contrary, the control and command unit of the drying device capable of managing, through software and known systems, the various drying processes, is not explicitly shown.

As will be seen later in the description, said control and command unit may be able to regulate the operation of the devices 4 for the blowing drying air and/or of the heating units, by regulating flow rate and/or temperature and/or duration of the air flow through known techniques and devices (e.g., by varying the number of revolutions of the blowing devices 4, the thermal power of the heating units 2 and/or by providing an intermittent operation of the same).

As already anticipated, said drying processes are carried out such that the humidity subtracted from the laundry does not increase that of the ambient in which the dryer is placed over the threshold values considered as satisfactory to ensure the thermo-hygrometric wellness of an individual and/or for the non-formation of condensation on walls and objects.

That is, the control and command unit is at least capable of:
- acquiring and determining the ambient humidity (through the first sensor means)
- setting and/or modulating the operating parameters of the drying flow (e.g., speed and/or temperature and/or duration) so that the amount of humidity removed from the laundry does not increase that of the ambient beyond the aforesaid "acceptable" comfort values.

By way of a non-limiting example, two possible embodiments are provided below in order to better illustrate the logic by which the drying device of the invention operates.

A first variant provides for measuring and monitoring the ambient relative humidity so that it does not exceed acceptable threshold values, possibly preset in the control unit.

For this purpose, at least one first sensor advantageously placed in the proximity or in correspondence of the box-shaped body 1 (e.g., in correspondence of at least one air suction grating) adapted to detect the ambient humidity (thus called "humidity sensor") is provided.

The control unit comparing the detected humidity value with that of reference ("acceptable threshold") and regulates the operating parameters of the drying flow so that the amount of humidity removed from the laundry does not increase that of the ambient beyond the aforesaid "acceptable" comfort values. Preferably, said control unit sets one of the preset drying programs, each characterised with predetermined values of duration, speed and/or temperature of the drying air flow.

Alternatively, it is possible to provide a second executive variant that for the maintenance of the optimal ambient conditions considers and measures also the humidity that the air flow has subtracted from the laundry and introduced in the ambient.

This can be achieved by integrating to said first sensor at least a second humidity sensor along the path of the air flow, in particular where said flow leaves the laundry to be dried, after having lapped it.

In this case, the control unit, having acquired and compared data relating to the ambient humidity and the drying air flow, is able to assess instant by instant how much humidity can be removed from the laundry without this involving an increase of the ambient one beyond "acceptable" values and regulate the operating parameters of the drying flow accordingly as described above.

As already anticipated, the drying operations are still not carried out if said detected value of ambient humidity is already greater than or equal to said "acceptable" values.

Preferably, said at least one second humidity sensor may be placed below the laundry hanging on the hanging means 12 of the drying device, according to known means and methods, for example, recessed in a suitable seat of the wall of installation of the drying device and communicating with it or on suitable supports integrated or connected thereto.

Even more preferably, as many second sensors as the air blowing devices 4 may be provided.

By way of an example, under these conditions the delivery of a drying air flow from said two or more blowing devices 4 is controlled independently by said second humidity sensors to each of said "operatively" associated blowing devices.

If therefore one of these second sensors does not detect decreases and/or changes of humidity over time, a fact substantially possible only when the hanging laundry is substantially dry or is not present, the control and command unit can turn off or regulate the operation of one or more of the said at least two blowing devices 4 and/or the relative heating units.

More precisely, the drying device of the invention can:
- automatically deliver the drying air flow from a single blowing device 4 so as to work at partial load;
- when at substantially full load, selectively turn off those blowing devices 4 below which the laundry is dried more quickly (e.g., by turning off the blowing devices under which shirts or linen are hanging, of quick drying, and at the same time allowing the drying process of the zones in which towels or sponges that are slower to dry are hanging);
- modulate the speed of said blowing devices 4 and/or the power of the relative heating units according to the humidity level detected in the drying air that has lapped the laundry, leaving it;
- provide ON-OFF cycles of said blowing devices 4 (this avoids, among the other things, consumption peaks);
- deactivate automatically all the blowing devices 4 and the related heating units when the drying of the laundry is complete.

For both the drying logics just described said humidity sensors may consist of hygrometers.

Nothing prevents that said sensors may be of the type able to detect also temperature variations of both the ambient in which the drying device is housed and the air flow generated therefrom.

Finally, it should be noted that the hanging device for drying the laundry of the invention may be advantageously suspended above a shower cabin or in case such a component is not available provide a containment structure 6 embodied, e.g. as a box-shaped structure, integrated to the drying device and useful for the containment of the laundry and the air flow; according to a particularly convenient and practical embodiment said containment structure 6 is made with flexible material, like cloth or plastic film and may be pulled back upwards when not in use.

Of course control means may be provided that allow a user to "force" the operation of the drying device of the invention even if with that humidity values that may go outside the limits provided for wellness may be obtained.

The "acceptable" humidity values, being notoriously subjective, may be adjustable by the user of the drying device.

It should finally be noted that the air flow generated by the drying device according to the invention favours the remixing of the ambient air, homogenizing the humidity and the temperature of the ambient in which said device is installed; this contributes to meeting the aforesaid "acceptable levels" of humidity.

## Claims

1. Drying method for laundry adapted to be implemented in a drying device comprising at least:
- at least a device (4) for the blowing of drying air
- a command and control unit at least capable of commanding and controlling the drying operations of said laundry
- at least a first sensor means adapted to detect at least the ambient humidity
said drying method providing the generation of at least one air flow having suitable drying operating parameters and capable of being guided and directed towards said laundry,
**characterised in that** said method comprises the steps of:
- acquiring and determining the ambient humidity
- setting and/or modulating said drying operating parameters of said drying air in such a way that the amount of humidity removed from the laundry does not increase the ambient humidity beyond preset threshold values, said preset threshold values being those values which:
- ensure at least the thermo-hygrometric wellness of an individual, said thermo-hygrometric wellness being defined according to the Fanger studies and provided in ASHRAE publications, and/or
- do not produce the formation of condensation at least on floors and walls of the ambient in which said drying is carried out,
it being understood that the existing air changes in the ambient must be sufficient for the maintenance of said preset threshold values.

2. Drying method according to claim 1
**characterised in that** said preset threshold values may be adjustable by the user of the drying device.

3. Drying method according to any previous claim,
**characterised in that** it provides for the heating of said drying air, said heating being obtained by means of at least one heating unit of said drying device.

4. Drying method according to any previous claim,
**characterised in that** the drying is not performed by said control and command unit if the detected value of ambient humidity is greater than or equal to said "acceptable" values.

5. Drying method according to any previous claim,
**characterised in that** it regulates said drying operating parameters of the air flow so as to keep the humidity value of said ambient substantially constant and lower than said "acceptable" values.

6. Drying method according to the previous claim, **characterised in that** it comprises the following steps
- determining and acquiring the ambient humidity through said first sensor means
- comparing by means of said control and command unit the value of ambient humidity detected with an "acceptable" threshold value, said threshold value being preset in said control and command unit
- regulating the above operating parameters of said drying air flow accordingly, said regulation being achieved by regulating the operation of said at least one blowing device (4) and/or the relative heating units by means of said control and command unit.

7. Drying method according to one or more of the claims 1 to 3,
**characterised in that** it regulates said drying operating parameters of the air flow by comparing the ambient humidity value with the humidity value of the air flow that leaves said laundry after having lapped it, said regulation allowing the ambient humidity not to exceed said preset threshold values.

8. Drying method according to the previous claim,
**characterised in that** it comprises the following steps
- determining and acquiring the ambient humidity through said first sensor means
- determining and acquiring the humidity value of said air flow that leaves said laundry after having lapped it through second humidity sensor means of said drying device
- comparing by means of said control and command unit the ambient humidity value detected with the humidity value of the air flow
- regulating the above operating parameters of said drying air flow accordingly, said regulation being achieved by regulating the operation of said at least one blowing device (4) and/or of the relative heating units.

9. Drying method according to any previous claim,
**characterised in that** said control and command unit sets one of the preset drying programs, each **characterised by** predetermined values of duration, speed and/or temperature of the drying air flow.

10. Drying method according to one or more of the previous claims,
**characterised in that** it provides the generation of two or more drying air flows, the drying method being able to:
- automatically deliver a single drying air flow so as to work at partial load; and/or
- selectively turn off, when at substantially full load, those drying air flows below which the laundry has dried more quickly; and/or
- modulate the speed and/or the temperature of said drying air flows depending on the humidity level detected in the drying air that has lapped the laundry, leaving it; and/or
- provide ON-OFF cycles of drying air flows; and/or
- deactivate all the drying air flows once the drying of the laundry is complete.

11. Laundry drying device adapted to implement the drying method according to one or more of claims 1 to 10, said drying device comprising a box-shaped body (1) capable of being fixed to the wall through fixing means (11) and provided with at least a suitable upper grating and at least a lower grating, which receives at least one blowing device (4) of the drying air, a control and command unit (3) provided with at least first sensor means of the humidity of the ambient in which said drying device is placed
**characterised in that** said box-shaped body (1) comprises suitable hanging means (12) for hanging the laundry to be dried, said hanging means (12) comprising one or more elements adapted to hang clothes hangers allowing a stowage of the laundry to be dried according to a substantially vertical set-up that favours the drying thereof and avoids the formation of crumples.

12. Drying device according to the previous claim,
**characterised in that** said hanging means (12) of the laundry to be dried are extractable from the bottom side of said box-shaped body (1) and movable from a retracted rest position to an extracted working one.

13. Drying device according to any previous claim from 11 on,
**characterised in that** said hanging means (12) comprise extractable appendices (13).

14. Drying device according to any previous claim from 11 on,
**characterised in that** the said fixing means (11) of the box-shaped body (1) to the installation wall are shaped to be able to approach or space said drying device from the installation wall as needed.

15. Drying device according to the previous claim,
**characterised in that** said fixing means (11) consist of retractable telescopic brackets that are extractable from said box-shaped body (1).

16. Drying device according to any previous claim from 11 on,
**characterised in that** it comprises at least one second sensor means adapted to detect the humidity value of the air flow that leaves the laundry after having lapped it for the drying thereof, said at least second sensor means being provided for each blowing device (4).

17. Drying device according to any previous claim from 11 on,
**characterised in that** it further comprises at least a relative heating unit of said drying air, each heating unit being able to be associated to said at least one blowing device (4).

18. Drying device according to the previous claim,
**characterised in that** it comprises at least two blowing devices (4), said drying device being able to:
- automatically deliver the drying air flow from a single blowing device (4) so as to work at partial load
- selectively turn off, when at substantially full load, those blowing devices (4) below which the laundry has dried more quickly
- modulate the speed of said blowing devices (4) and/or the power of the relative heating units depending on the humidity level detected in the drying air that has lapped the laundry, leaving it
- provide ON-OFF cycles of said blowing devices (4)
- deactivate all the blowing devices (4) and the related heating units once the drying of the laundry is complete,
said operating modes being carried out and managed by the control and command unit (3).

19. Drying device according to any previous claim from 11 on,
**characterised in that** it is suitable for being installed over the walls of a shower cabin.

20. Drying device according to any previous claim from 11 on, excluding 18, **characterised in that** it comprises an underlying containment structure (6) of the laundry, said containment structure (6) being able to be made of flexible material.

21. Drying device according to the previous claim,
**characterised in that** said containment structure (6) is extractable downwards.

## Patentansprüche

1. Trocknungsverfahren für Wäsche, das geeignet ist, in einer Trocknungsvorrichtung durchgeführt zu werden, umfassend mindestens:
- eine Vorrichtung (4) zum Blasen von Trocknungsluft,
- eine Befehls- und Steuereinheit, die mindestens dazu ausgelegt ist, die Trockenvorgänge der Wäsche zu befehlen und zu steuern,
- mindestens ein erstes Sensormittel, das geeignet ist, mindestens die Umgebungsfeuchtigkeit zu erfassen,
wobei das Trocknungsverfahren das Erzeugen mindestens eines Luftstroms bereitstellt, der geeignete Trocknungsbetriebsparameter aufweist und geeignet ist, zu der Wäsche geleitet und gerichtet zu werden,
**dadurch gekennzeichnet, dass** das Verfahren die Schritte aufweist des:
- Erfassens und Bestimmens der Umgebungsfeuchtigkeit,
- Einstellens und/oder Modulierens der Trocknungsbetriebsparameter der Trocknungsluft derart, dass die Menge an Feuchtigkeit, die aus der Wäsche entzogen wird, die Umgebungsfeuchtigkeit nicht über voreingestellte Schwellenwerte hinaus erhöht, wobei die voreingestellten Schwellenwerte diejenigen Werte sind, die:
- mindestens das thermohygrometrische Wohlbefinden einer Person gewährleisten, wobei das thermohygrometrische Wohlbefinden gemäß den Studien von Fanger definiert ist und in ASHRAE-Veröffentlichungen bereitgestellt wird, und/oder
- keine Bildung von Kondenswasser mindestens auf Böden und Wänden der Umgebung erzeugen, in der das Trocknen durchgeführt wird,
wobei davon auszugehen ist, dass der bestehende Luftaustausch in der Umgebung ausreichen muss, um die voreingestellten Schwellenwerte aufrechtzuerhalten.

2. Trocknungsverfahren nach Anspruch 1,
**dadurch gekennzeichnet, dass** die voreingestellten Schwellenwerte vom Benutzer der Trocknungsvorrichtung eingestellt werden können.

3. Trocknungsverfahren nach einem der vorhergehenden Ansprüche, **dadurch gekennzeichnet, dass** es für das Erwärmen der Trocknungsluft sorgt, wobei das Erwärmen durch mindestens eine Heizeinheit der Trocknungsvorrichtung erhalten wird.

4. Trocknungsverfahren nach einem der vorhergehenden Ansprüche, **dadurch gekennzeichnet, dass** das Trocknen von der Steuer-und Befehlseinheit nicht durchgeführt wird, wenn der erfasste Wert der Umgebungsfeuchtigkeit größer oder gleich den "akzeptablen" Werten ist.

5. Trocknungsverfahren nach einem der vorhergehenden Ansprüche, **dadurch gekennzeichnet, dass** es die Trocknungsbetriebsparameter des Luftstroms derart reguliert, um den Feuchtigkeitswert der Umgebung im Wesentlichen konstant und niedriger als die "akzeptablen" Werte zu halten.

6. Trocknungsverfahren nach dem vorhergehenden Anspruch,
**dadurch gekennzeichnet, dass** es die folgenden Schritte aufweist
- Bestimmen und Erfassen der Umgebungsfeuchtigkeit durch das erste Sensormittel,
- Vergleichen des erfassten Wertes der Umgebungsfeuchtigkeit mit einem "akzeptablen" Schwellenwert durch die Steuer- und Befehlseinheit, wobei der Schwellenwert in der Steuer- und Befehlseinheit voreingestellt wird,
- Regulieren der obigen Betriebsparameter des Trocknungsluftstroms auf entsprechende Weise, wobei das Regulieren erhalten wird, indem der Betrieb der mindestens einen Vorrichtung zum Blasen (4) und/oder die jeweiligen Heizeinheiten durch die Steuer- und Befehlseinheit reguliert werden.

7. Trocknungsverfahren nach einem oder mehreren der Ansprüche 1 bis 3,
**dadurch gekennzeichnet, dass** es die Trocknungsbetriebsparameter des Luftstroms durch Vergleichen des Wertes der Umgebungsfeuchtigkeit mit dem Feuchtigkeitswert des Luftstroms, der aus der Wäsche austritt, nachdem er sie umhüllt hat, reguliert, wobei das Regulieren ermöglicht, dass die Umgebungsfeuchtigkeit die voreingestellten Schwellenwerte nicht überschreitet.

8. Trocknungsverfahren nach dem vorhergehenden Anspruch,
**dadurch gekennzeichnet, dass** es die folgenden Schritte aufweist
- Bestimmen und Erfassen der Umgebungsfeuchtigkeit durch das erste Sensormittel,
- Bestimmen und Erfassen des Feuchtigkeitswerts des Luftstroms, der aus der Wäsche austritt, nachdem er sie umhüllt hat, durch zweite Feuchtigkeitssensormittel der Trocknungsvorrichtung,
- Vergleichen des erfassten Wertes der Umgebungsfeuchtigkeit mit dem Feuchtigkeitswert des Luftstroms durch die Befehls- und Steuereinheit,
- Regulieren der obigen Betriebsparameter des Trockungsluftstroms auf entsprechende Weise, wobei das Regulieren erhalten wird, indem der Betrieb der mindestens einen Vorrichtung zum Blasen (4) und/oder der jeweiligen Heizeinheiten reguliert wird.

9. Trocknungsverfahren nach einem der vorhergehenden Ansprüche,
**dadurch gekennzeichnet, dass** die Steuer- und Befehlseinheit eines der voreingestellten Programme einstellt, wobei jedes durch vorgegebene Werte der Dauer, Geschwindigkeit und/oder Temperatur des Trocknungsluftstroms gekennzeichnet ist.

10. Trocknungsverfahren nach einem oder mehreren der vorhergehenden Ansprüche,
**dadurch gekennzeichnet, dass** es für das Erzeugen von zwei oder mehreren Trocknungsluftströmen sorgt, wobei das Trocknungsverfahren geeignet ist:
- einen einzelnen Trocknungsluftstrom automatisch derart bereitzustellen, um bei Teillast zu arbeiten; und/oder
- um jene Trocknungsluftströme bei im Wesentlichen voller Last selektiv auszuschalten, unter denen die Wäsche schneller getrocknet ist; und/oder
- die Geschwindigkeit und/oder die Temperatur der Trocknungsluftströme in Abhängigkeit von dem Feuchtigkeitsniveau zu modulieren, das in der Trocknungsluft erfasst wird, die die Wäsche umhüllt hat, die daraus heraustritt; und/oder
- EIN-AUS-Zyklen von Trocknungsluftströmen bereitzustellen; und/oder
- alle Trocknungsluftströme zu deaktivieren, sobald das Trocknen der Wäsche abgeschlossen ist.

11. Wäschetrocknungsvorrichtung, die geeignet ist, das Trocknungsverfahren nach einem oder mehreren der Ansprüche 1 bis 10 umzusetzen, wobei die Trocknungsvorrichtung einen kastenförmigen Körper (1) aufweist, der geeignet ist, durch Befestigungsmittel (11) an der Wand befestigt zu werden und mit mindestens einem geeigneten oberen Gitter und mindestens einem unteren Gitter versehen ist, der mindestens eine Vorrichtung zum Blasen (4) der Trocknungsluft, eine Steuer- und Befehlseinheit (3), die mit mindestens ersten Sensormitteln für die Feuchtigkeit der Umgebung versehen ist, in der diese Trocknungsvorrichtung angeordnet ist, aufnimmt,
**dadurch gekennzeichnet, dass** der kastenförmige Körper (1) geeignete Aufhängemittel (12) zum Aufhängen der zu trocknenden Wäsche aufweist, wobei die Aufhängemittel (12) ein oder mehrere Elemente aufweisen, die zum Aufhängen von Kleiderbügeln geeignet sind, die ein Verstauen der zu trocknenden Wäsche gemäß einer im Wesentlichen vertikalen Anordnung ermöglichen, die das Trocknen davon begünstigt und das Bilden von Falten vermeidet.

12. Trocknungsvorrichtung nach dem vorhergehenden Anspruch,
**dadurch gekennzeichnet, dass** die Aufhängemittel (12) der zu trocknenden Wäsche von der Unterseite des kastenförmigen Körpers (1) herausziehbar und von einer eingezogenen Ruheposition zu einer herausgezogenen Arbeitsposition beweglich sind.

13. Trocknungsvorrichtung nach einem der vorhergehenden Ansprüche ab Anspruch 11,
**dadurch gekennzeichnet, dass** die Aufhängemittel (12) herausziehbare Fortsätze (13) aufweisen.

14. Trocknungsvorrichtung nach einem der vorhergehenden Ansprüche ab Anspruch 11,
**dadurch gekennzeichnet, dass** die Befestigungsmittel (11) des kastenförmigen Körpers (1) an der Installationswand derart gestaltet sind, dass sie die Trocknungsvorrichtung nach Bedarf an die Installationswand annähern oder davon beabstanden können.

15. Trocknungsvorrichtung nach dem vorhergehenden Anspruch,
**dadurch gekennzeichnet, dass** die Befestigungsmittel (11) aus einziehbaren Teleskophalterungen bestehen, die aus dem kastenförmigen Körper (1) herausziehbar sind.

16. Trocknungsvorrichtung nach einem der vorhergehenden Ansprüche ab Anspruch 11,
**dadurch gekennzeichnet, dass** sie mindestens ein zweites Sensormittel aufweist, das geeignet ist, den Feuchtigkeitswert des Luftstroms zu erfassen, der aus der Wäsche austritt, nachdem er sie zum Trocknen davon umhüllt hat, wobei das mindestens eine zweite Sensormittel für jede Vorrichtung zum Blasen (4) vorgesehen ist.

17. Trocknungsvorrichtung nach einem der vorhergehenden Ansprüche ab Anspruch 11,
**dadurch gekennzeichnet, dass** es ferner mindestens eine jeweilige Heizeinheit der Trocknungsluft aufweist, wobei jede Heizeinheit geeignet ist, mit der mindestens einen Vorrichtung zum Blasen (4) verbunden zu werden.

18. Trocknungsvorrichtung nach dem vorhergehenden Anspruch,
**dadurch gekennzeichnet, dass** sie mindestens zwei Vorrichtungen zum Blasen (4) aufweist, wobei die Trocknungsvorrichtung geeignet ist:
- den Trocknungsluftstrom von einer einzelnen Vorrichtung zum Blasen (4) automatisch derart bereitzustellen, um bei Teillast zu arbeiten
- jene Vorrichtungen zum Blasen (4) bei im Wesentlichen voller Last selektiv auszuschalten, unter denen die Wäsche schneller getrocknet ist
- die Geschwindigkeit der Vorrichtungen zum Blasen (4) und/oder die Leistung der jeweiligen Heizeinheiten in Abhängigkeit von dem Feuchtigkeitsniveau zu modulieren, das in der Trocknungsluft erfasst wird, die die Wäsche umhüllt hat, die daraus heraustritt
- EIN-AUS-Zyklen von den Vorrichtungen zum Blasen (4) bereitzustellen
- alle Vorrichtungen zum Blasen (4) und die zugehörigen Heizeinheiten zu deaktivieren, sobald das Trocknen der Wäsche abgeschlossen ist,
wobei diese Betriebsarten von der Steuer- und Befehlseinheit (3) ausgeführt und verwaltet werden.

19. Trocknungsvorrichtung nach einem der vorhergehenden Ansprüche ab Anspruch 11,
**dadurch gekennzeichnet, dass** es geeignet ist, über den Wänden einer Duschkabine installiert zu werden.

20. Trocknungsvorrichtung nach einem der vorhergehenden Ansprüche ab Anspruch 11, mit Ausnahme von Anspruch 18, **dadurch gekennzeichnet, dass** sie eine darunter liegende Einschließungsstruktur (6) der Wäsche aufweist, wobei die Einschließungsstruktur (6) aus flexiblem Material hergestellt werden kann.

21. Trocknungsvorrichtung nach dem vorhergehenden Anspruch,
**dadurch gekennzeichnet, dass** die Einschließungsstruktur (6) nach unten herausziehbar ist.

## Revendications

1. Procédé de séchage du linge adapté pour être mis en œuvre dans un dispositif de séchage comprenant au moins:
- au moins un dispositif (4) pour le soufflage d'air de séchage
- une unité de commande et de contrôle au moins capable de commander et de contrôler les opérations de séchage dudit linge
- au moins un premier moyen de détection adapté pour détecter au moins l'humidité ambiante
ledit procédé de séchage prévoyant la génération d'au moins un flux d'air ayant des paramètres de fonctionnement de séchage appropriés et pouvant être guidé et dirigé vers ledit linge,
**caractérisé en ce que** ledit procédé comprend les étapes de:
- l'acquisition et la détermination de l'humidité ambiante
- le réglage et/ou la modulation desdits paramètres de fonctionnement du séchage dudit air de séchage de telle sorte que la quantité d'humidité retirée du linge n'augmente pas l'humidité ambiante au-delà de valeurs seuil préétablies, lesdites valeurs seuil préétablies étant les valeurs qui:
- assurent au moins le bien-être thermo-hygrométrique d'un individu, ledit bien-être thermo-hygrométrique étant défini selon les études de Fanger et fourni dans les publications de l'ASHRAE, et/ou
- ne produisent pas la formation de condensation au moins sur les sols et les murs de l'environnement dans lequel ledit séchage est effectué,
étant entendu que les variations existantes de l'air ambiant doivent être suffisantes pour le maintien desdites valeurs seuil préétablies.

2. Procédé de séchage selon la revendication 1
**caractérisé en ce que** lesdites valeurs de seuil préétablies peuvent être réglées par l'utilisateur du dispositif de séchage.

3. Procédé de séchage selon l'une quelconque des revendications précédentes,
**caractérisé en ce qu'**il prévoit le chauffage dudit air de séchage, ledit chauffage étant obtenu au moyen d'au moins une unité de chauffage dudit dispositif de séchage.

4. Procédé de séchage selon l'une quelconque des revendications précédentes,
**caractérisé en ce que** le séchage n'est pas effectué par ladite unité de contrôle et de commande si la valeur détectée de l'humidité ambiante est supérieure ou égale auxdites valeurs «acceptables».

5. Procédé de séchage selon l'une quelconque des revendications précédentes,
**caractérisé en ce qu'**il régule lesdits paramètres de fonctionnement de séchage du flux d'air de manière à maintenir la valeur d'humidité dudit milieu ambiant sensiblement constante et inférieure auxdites valeurs «acceptables».

6. Procédé de séchage selon la revendication précédente,
**caractérisé en ce qu'**il comprend les étapes suivantes
- la détermination et l'acquisition de l'humidité ambiante par ledit premier moyen de détection
- comparer au moyen de ladite unité de contrôle et de commande la valeur de l'humidité ambiante détectée avec une valeur seuil «acceptable», ladite valeur seuil étant préétablie dans ladite unité de contrôle et de commande
- la régulation des paramètres de fonctionnement susmentionnés dudit flux d'air de séchage en conséquence, ladite régulation étant obtenue en réglant le fonctionnement dudit au moins un dispositif de soufflage (4) et/ou des unités de chauffage relatives au moyen de ladite unité de contrôle et de commande.

7. Procédé de séchage selon une ou plusieurs des revendications 1 à 3, **caractérisé en ce qu'**il régule lesdits paramètres de fonctionnement du séchage du flux d'air en comparant la valeur de l'humidité ambiante avec la valeur de l'humidité du flux d'air qui quitte ledit linge après l'avoir lavé, ladite régulation permettant à l'humidité ambiante de ne pas dépasser lesdites valeurs seuil préétablies.

8. Procédé de séchage selon la revendication précédente,
**caractérisé en ce qu'**il comprend les étapes suivantes
- la détermination et l'acquisition de l'humidité ambiante par ledit premier moyen de détection
- la détermination et l'acquisition de la valeur d'humidité dudit flux d'air qui quitte ledit linge après l'avoir tapoté à travers un second moyen de capteur d'humidité dudit dispositif de séchage
- la comparaison, au moyen de ladite unité de contrôle et de commande, de la valeur de l'humidité ambiante détectée avec la valeur de l'humidité du flux d'air
- en régulant en conséquence les paramètres de fonctionnement susmentionnés dudit flux d'air de séchage, ladite régulation étant obtenue en réglant le fonctionnement dudit au moins un dispositif de soufflage (4) et/ou des unités de chauffage correspondantes.

9. Procédé de séchage selon l'une quelconque des revendications précédentes,
**caractérisé en ce que** ladite unité de contrôle et de commande règle l'un des programmes de séchage préétablis, chacun étant **caractérisé par** des valeurs prédéterminées de durée, de vitesse et/ou de température du flux d'air de séchage.

10. Procédé de séchage selon une ou plusieurs des revendications précédentes,
**caractérisé en ce qu'**il permet la génération de deux ou plusieurs flux d'air de séchage, le procédé de séchage pouvant:
- fournir automatiquement un seul flux d'air de séchage de manière à travailler à charge partielle; et/ou
- éteindre sélectivement, lorsqu'ils sont pratiquement à pleine charge, les flux d'air de séchage en dessous desquels le linge a séché plus rapidement; et/ou
- moduler la vitesse et/ou la température desdits flux d'air de séchage en fonction du niveau d'humidité détecté dans l'air de séchage qui a tapoté le linge, le laissant ainsi; et/ou
- fournir des cycles ON-OFF de séchage des flux d'air; et/ou
- désactiver tous les flux d'air de séchage une fois que le séchage du linge est terminé.

11. Dispositif de séchage du linge adapté pour mettre en œuvre le procédé de séchage selon une ou plusieurs des revendications 1 à 10, ledit dispositif de séchage comprenant un corps en forme de boîte (1) pouvant être fixé au mur par des moyens de fixation (11) et muni d'au moins une grille supérieure appropriée et d'au moins une grille inférieure, qui reçoit au moins un dispositif de soufflage (4) de l'air de séchage, une unité de contrôle et de commande (3) munie d'au moins des premiers moyens de détection de l'humidité du milieu dans lequel ledit dispositif de séchage est placé
**caractérisé en ce que** ledit corps en forme de boîte (1) comprend des moyens de suspension appropriés (12) pour suspendre le linge à sécher, lesdits moyens de suspension (12) comprenant un ou plusieurs éléments adaptés pour suspendre des cintres à linge permettant un rangement du linge à sécher selon une disposition sensiblement verticale qui favorise le séchage de celui-ci et évite la formation de plis.

12. Dispositif de séchage selon la revendication précédente,
**caractérisé en ce que** lesdits moyens de suspension (12) du linge à sécher sont extractibles de la face inférieure dudit corps en forme de boîte (1) et mobiles d'une position de repos rétractée à une position de travail extraite.

13. Dispositif de séchage selon l'une quelconque des revendications précédentes à partir de 11,
**caractérisé en ce que** lesdits moyens de suspension (12) comprennent des appendices extractibles (13).

14. Dispositif de séchage selon l'une quelconque des revendications précédentes à partir de 11,
**caractérisé en ce que** lesdits moyens de fixation (11) du corps en forme de boîte (1) au mur de l'installation sont conformés de manière à pouvoir approcher ou espacer ledit dispositif de séchage du mur de l'installation selon les besoins.

15. Dispositif de séchage selon la revendication précédente,
**caractérisé en ce que** lesdits moyens de fixation (11) consistent en des supports télescopiques rétractables qui sont extractibles dudit corps en forme de boîte (1).

16. Dispositif de séchage selon l'une quelconque des revendications précédentes à partir de 11,
**caractérisé en ce qu'**il comprend au moins un second moyen de détection adapté pour détecter la valeur d'humidité du flux d'air qui quitte le linge après l'avoir tapoté pour le séchage de celui-ci, ledit au moins second moyen de détection étant prévu pour chaque dispositif de soufflage (4).

17. Dispositif de séchage selon l'une quelconque des revendications précédentes à partir de 11,
**caractérisé en ce qu'**il comprend en outre au moins une unité de chauffage relative dudit air de séchage, chaque unité de chauffage pouvant être associée audit au moins un dispositif de soufflage (4).

18. Dispositif de séchage selon la revendication précédente,
**caractérisé en ce qu'**il comprend au moins deux dispositifs de soufflage (4), ledit dispositif de séchage pouvant:
- délivrer automatiquement le flux d'air de séchage à partir d'un seul dispositif de soufflage (4) de manière à travailler à charge partielle
- éteindre sélectivement, lorsqu'ils sont à peu près à pleine charge, les dispositifs de soufflage (4) en dessous desquels le linge a séché plus rapidement
- moduler la vitesse desdits dispositifs de soufflage (4) et/ou la puissance des unités de chauffage relatives en fonction du taux d'humidité détecté dans l'air de séchage qui a tapoté le linge, le laissant
- fournir des cycles ON-OFF desdits dispositifs de soufflage (4)
- désactivez tous les dispositifs de soufflage (4) et les unités de chauffage correspondantes une fois le séchage du linge terminé,
lesdits modes de fonctionnement étant réalisés et gérés par l'unité de contrôle et de commandement (3).

19. Dispositif de séchage selon l'une quelconque des revendications précédentes à partir de 11,
**caractérisé en ce qu'**il peut être installé sur les parois d'une cabine de douche.

20. Dispositif de séchage selon l'une quelconque des revendications précédentes à partir de 11, à l'exclusion de 18, **caractérisé en ce que** 'il comprend une structure de confinement sous-jacente (6) du linge, ladite structure de confinement (6) pouvant être en matériau flexible.

21. Dispositif de séchage selon la revendication précédente,
**caractérisé en ce que** ladite structure de confinement (6) est extractible vers le bas.
